# EUROPÄISCHE PATENTSCHRIFT

(11) **EP 3 557 114 B1**
(45) Veröffentlichungstag und Bekanntmachung des Hinweises auf die Patenterteilung: **16.06.2021**
(21) Anmeldenummer: 18168595.9
(22) Anmeldetag: 20.04.2018
(51) Int. Cl.: F16P 3/08

(54) **SICHERHEITSSCHALTER**
SAFETY SWITCH
COMMUTATEUR DE SÉCURITÉ

(43) Veröffentlichungstag der Anmeldung: 23.10.2019
(73) Patentinhaber: EUCHNER GmbH + Co. KG, 70771 Leinfelden-Echterdingen (DE)
(72) Erfinder: Beie, Lars, 31061 Alfeld (Leine) (DE)
(74) Vertreter: Ruckh, Rainer Gerhard

(56) Entgegenhaltungen:
- DE-A1-102006 020 500
- DE-A1-102009 048 743
- DE-U1- 9 311 377

## Beschreibung

Die Erfindung betrifft einen Sicherheitsschalter.

Bekannte Sicherheitsschalter werden typischerweise im Bereich der Sicherheitstechnik eingesetzt. Für den Einsatz im Bereich der Sicherheitstechnik, insbesondere im Bereich des Personenschutzes ist es erforderlich, dass die Sicherheitsschalter normative Anforderungen hinsichtlich deren Fehlersicherheit erfüllen, so dass gewährleistet ist, dass mit der Sicherheitsschalteranordnung eine entsprechend sichere Überwachungsfunktion durchgeführt werden kann. Derartige Sicherheitsschalter können typischerweise zur Sicherung des Zugangs zu einem Gefahrenbereich eingesetzt werden. Beispielsweise kann mit einem Sicherheitsschalter eine Zuhaltung einer trennenden Schutzeinrichtung, wie einer Schutztür als Zugang zu einem Gefahrenbereich, abgesichert werden. In diesem Fall wird beispielsweise der Betrieb einer gefahrbringenden Anlage innerhalb des Gefahrenbereichs nur dann freigegeben, wenn mit dem Sicherheitsschalter die Schutztür zugehalten ist. Die Freigabe der Anlage kann über eine Sicherheitssteuerung erfolgen, welcher sicherheitsrelevante Schaltsignale des Sicherheitsschalters zugeführt sind.

Zur Zuhaltung der trennenden Schutzeinrichtung können unterschiedliche Sperrelemente dem Sicherheitsschalter zugeordnet oder in diesem integriert sein.

Ein Beispiel hierfür ist ein Sicherheitsschalter, dem ein Betätiger zugeordnet ist.

Wenn sich die trennende Schutzeinrichtung, insbesondere die Schutztür, in ihrer Schließstellung und Zuhalteposition befindet, wird der Betätiger in Form eines Riegels oder dergleichen in Eingriff mit dem Sicherheitsschalter gebracht, indem beispielsweise der Betätiger in eine Aussparung des Sicherheitsschalters eingefahren wird. Diese Betätigerposition wird zum Beispiel dadurch kontrolliert, dass mit einem RFID-Lesegerät im Sicherheitsschalter ein Transponder im Betätiger erkannt wird.

Zusätzlich kann eine Zuhaltung der Schutztür vorgesehen sein. Eine derartige Zuhaltung weist ein Zuhalteelement, beispielsweise einen Zuhaltebolzen, auf. Der Zuhaltebolzen kann mit einem elektrischen Antrieb oder dergleichen in eine Sperrstellung verfahren werden, in der der Betätiger mit diesem zum Beispiel zugehalten wird, so dass die Schutztür gegen ein Öffnen gesichert ist.

Um in Notfällen, wie bei einem Stromausfall, die Schutztür öffnen zu können, weisen derartige Systeme eine mechanisch betätigbare Entriegelungseinheit auf, mit der auf mechanischem Weg die Zuhaltung der Schutztür aufgehoben werden kann, so dass sie dann geöffnet werden kann.

Die DE 93 11 377 U1 betrifft eine Vorrichtung zur Betätigung einer Hilfsentriegelung für Türzuhaltungen, die als Sicherheitsvorrichtung für Schutztüren, -hauben oder -abdeckungen vorgesehen sind, und die Funktion eines Zuhaltemechanismusses derart ausführen, dass ein an der Tür, Haube oder Abdeckung befestigter, schlüsselförmiger Betätiger formschlüssig in ein Antriebsorgan eines innerhalb des zu schützenden Raumes angebrachten Sicherheitsschalters einführbar ist und durch eine mechanische Sperre verriegelt wird, wobei die Hilfsentriegelung dafür sorgt, dass im Störfall eine mechanische Entriegelung erfolgen kann. Die fernbedienbare Betätigung der Hilfsentriegelung erfolgt insbesondere durch Aktivierung eines Drucktasters, der die Druckbewegung mittels eine Bowdenzuges weiterleitet, der mit dem Entriegelungsmechanismus gekoppelt ist, wobei der Bowdenzug mit Außenzug und starrem Innenzug wirkt.

Die DE 10 2009 048 743 A1 bezieht sich auf einen Sicherheitsschalter mit Zuhaltung und Fluchtentriegelung. Der Sicherheitsschalter weist einen Seilzug oder einen Draht auf, der teilweise im Gefahrenbereich verläuft und über den die Fluchtentriegelung des Schalters aus dem Gefahrenbereich heraus ausgelöst werden kann. Der Draht ist dabei durch ein Spannmittel vorgespannt und wodurch die Fluchtentriegelung in einer Grundstellung gehalten wird. Zum Auslösen kann der Draht mit einer Zug- oder Druckkraft beaufschlagt werden. Zusätzlich löst die Fluchtentriegelung dadurch auch bei einem Drahtbruch aus.

Die DE 20 10 2006 020 500 A1 betrifft eine Entsperreinrichtung für eine Vorrichtung zum Überwachen des Zustandes einer Schutzeinrichtung, insbesondere für einen Sicherheitsschalter zum Überwachen des geschlossenen Zustandes einer Schutztür oder dergleichen, wobei die Vorrichtung eine Sperreinrichtung aufweist, mittels der die Schutzeinrichtung zuhaltbar ist und im zugehaltenen Zustand sperrbar ist, und wobei mittels der Entsperreinrichtung die Sperrwirkung der Sperreinrichtung aufhebbar ist. Die Entsperreinrichtung weist ein Verbindungselement auf, mittels dem ein Betätigungselement der Entsperreinrichtung, das entfernt von der Vorrichtung angeordnet werden kann, mit einem an der Vorrichtung festlegbaren oder von der Vorrichtung ausgebildeten Koppelelement verbunden ist.

Der Erfindung liegt die Aufgabe zugrunde, für einen Sicherheitsschalter der eingangs genannten Art eine Entriegelungseinheit bereitzustellen, welche einen einfachen Aufbau und zugleich eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Sicherheitsschalter mit einem mittels Stellmitteln betätigbaren Sperrelement. Mittels der Stellmittel ist das Sperrelement in eine Zuhalteposition einbringbar und dort mit einer Stellkraft gehalten. Dabei ist im Sicherheitsschalter eine Entriegelungseinheit mit einem mechanisch betätigbaren Schubband vorgesehen. Durch Betätigung des Schubbands wird das Sperrelement aus seiner Zuhalteposition gelöst.

Die erfindungsgemäße Entriegelungseinheit weist einen einfachen Aufbau auf, da eine mechanische Betätigung direkt auf das Schubband umgesetzt wird, welches wiederum direkt auf das Sperrelement einwirkt, um dieses aus der Zuhalteposition zu lösen. Die erfindungsgemäße Entriegelungseinheit weist somit eine geringe Anzahl von Komponenten auf und kann daher kostengünstig hergestellt werden.

Ein wesentlicher Aspekt der Erfindung besteht darin, dass das Schubband ein schubsteifes Bauteil ist. Wird durch eine mechanische Betätigung eine Kraft, insbesondere Druckkraft ausgeübt, wird das Schubband als schubsteife Einheit auf das Sperrelement zubewegt und löst dieses aus der Zuhalteposition, da die Druckkraft der mechanischen Betätigung im Wesentlichen vollständig auf das Sperrelement übertragen wird, wodurch das Sperrelement sicher aus der Zuhalteposition gelöst wird. Die Entriegelungseinheit weist somit eine hohe Funktionssicherheit auf.

Gemäß einer vorteilhaften Ausführungsform ist ein längsseitiges Ende des Schubbands mit einem mechanischen Betätigungselement verbunden. Bei Betätigen des mechanischen Betätigungselements wird das Schubband in dessen Längsrichtung bewegt, so dass das zweite längsseitige Ende auf das Sperrelement einwirkt.

Dabei kann insbesondere das mechanische Betätigungselement einen Druccknopf aufweisen.

Ein Benutzer kann dann das an der Außenseite des Sicherheitsschalters zugängliche mechanische Betätigungselement betätigen. Für den Fall, dass das mechanische Betätigungselement ein Druckknopf ist, drückt der Benutzer gegen den Druckknopf. In jedem Fall wird die Betätigung des mechanischen Betätigungselements in eine Bewegung des Schubbands entlang dessen Längsrichtung umgesetzt, wodurch das freie Ende des Schubbands in Eingriff mit dem Sperrelement kommt und dieses aus der Zuhalteposition löst.

Um den Eingriff des Schubbands am Sperrungselement zu optimieren, ist die Kontur des zweiten längsseitigen Endes an die Kontur des Sperrelements angepasst.

Besonders vorteilhaft ist, dass das Schubband in dessen Längsrichtung schubsteif ausgebildet ist und in einer Richtung quer zur Längsrichtung biegbar ist.

Durch diese Biegbarkeit können komplexere, insbesondere gekrümmte Bahnkurven des Schubbands vorgegeben werden. Wesentlich hierbei ist, dass das Schubband auch entlang diesen gegebenenfalls gekrümmten Bahnkurven bei einer Verschiebung in Längsrichtung seine Schubsteifigkeit behält, so dass bei Betätigen des mechanischen Betätigungselements die von diesem ausgeübte Kraft, insbesondere Druckkraft, über das Schubband auf das Sperrelement übertragen wird. Durch die Möglichkeit der Vorgabe komplexer, insbesondere abschnittsweise gekrümmter Bahnkurven, kann das Schubband und damit die gesamte Entriegelungseinheit flexibel an die jeweilige Bauform des Sicherheitsschalters angepasst werden.

Insbesondere ist es möglich, mit dem Schubband eine Umlenkung derart zu realisieren, dass die Krafteinwirkung am mechanischen Betätigungselement in eine andere Richtung wirkt als die Kraftrichtung auf das Sperrelement.

Damit kann die Anbringung des mechanischen Betätigungselements unabhängig von der konstruktiven Ausbildung des Sperrelements und insbesondere der Bewegungsrichtung dieses Sperrelements gewählt werden.

Besonders vorteilhaft ist dabei, dass das Schubband in einer Schubbandführung entlang einer zumindest abschnittsweise gekrümmten Bahn verlaufend zwangsgeführt ist.

Durch die mit der Schubbandführung bewerkstelligte Zwangsführung ist gewährleistet, dass das Schubband nur in einer Längsrichtung bewegt werden kann, um die vom mechanischen Betätigungselement ausgeübte Kraft auf das Sperrelement zu übertragen. Jedoch wird ein unerwünschtes Abknicken oder Aufbiegen des Schubbands, das die Kraftübertragung vom mechanischen Betätigungselement auf das Sperrelement beeinträchtigt, vermieden. Damit ist eine sichere, reproduzierbare Funktion der Entriegelungseinheit gewährleistet.

Ein weiterer wesentlicher Vorteil der so ausgestalteten Entriegelungseinheit besteht darin, dass die vom mechanischen Betätigungselement auf das Schubband ausgeübte Schubbewegung direkt auf das Sperrelement umgesetzt wird, wodurch der für eine Lösung des Sperrelements aus der Zuhalteposition notwendige Verstellweg ohne Probleme realisiert werden kann.

Wie aus dem Begriff Schubband unmittelbar folgt, stellt dieses einen bandförmigen Körper dar, dessen Breite erheblich größer ist als dessen Dicke.

Gemäß einer vorteilhaften Ausgestaltung kann das Schubband von einem einzelnen Blechband gebildet sein, das eine hohe Schubsteifigkeit aufweist. Um die erforderliche Biegbarkeit des Schubbands zu gewährleisten, muss das Blechband hinreichend dünn sein.

Diese Ausführungsform kann derart weitergebildet sein, dass das Schubband aus einer mehrlagigen Struktur von Blechbändern besteht. Die einzelnen Blechbänder sind so dünn, dass sie sich leicht durchbiegen lassen. Durch die Zusammenfassung der Blechbänder zu einem Verbund weist das Schubband eine hohe Schubsteifigkeit auf.

Alternativ kann das Schubband aus einem Kunststoffteil bestehen.

Schließlich kann das Schubband aus einer Mehranordnung von in dessen Längsrichtung hintereinander angeordneten, gelenkig verbundenen Gliedern bestehen, wobei vorteilhaft die Glieder aus Kunststoff und/oder Metall und/oder Keramik bestehen.

Gemäß einer vorteilhaften Ausführungsform der Erfindung wird mit dem Sicherheitsschalter eine trennende Schutzeinrichtung, insbesondere eine Schutztür, als Zugang zu einem Gefahrenbereich überwacht.

Das Sperrelement dient dabei allgemein zur Zuhaltung der trennenden Schutzeinrichtung in deren Schließstellung.

Beispielsweise kann im Sicherheitsschalter selbst ein Sperrmittel vorgesehen sein, der dann, wenn die trennende Schutzeinrichtung in ihre Schließstellung eingefahren ist, zu deren Zuhaltung betätigt wird. Dabei kann das Sperrmittel beispielsweise aus dem Sicherheitsschalter ausgefahren werden und in eine Aufnahme in einem Betätiger in der trennenden Schutzeinrichtung greifen.

Entsprechende Systeme sind aus WO 2016/058718 A1 und DE 10 2013 014 456 A1 bekannt.

Generell kann ein solches Sperrelement in Form eines Riegels, Bolzen oder dergleichen ausgebildet sein.

Gemäß einer besonders vorteilhaften Ausgestaltung bildet das Sperrelement ein Zuhalteelement, das beispielsweise von einem Zuhaltebolzen gebildet ist.

Bei einem Sicherheitsschalter, der einen Betätiger aufweist oder welchem ein Betätiger zugeordnet ist, welcher eine trennende Schutzeinrichtung, insbesondere eine Schutztür, in ihrer Schließstellung hält und sichert, dient das Sperrelement dazu, den Betätiger zu zu halten, um so ein unkontrolliertes Öffnen der trennenden Schutzeinrichtung zu vermeiden.

Generell wird das Sperrelement mit einer vorgegebenen Stellkraft in der Zuhalteposition gehalten. Vorteilhaft ist die Stellkraft eine Federkraft, eine Magnetkraft oder eine von einem elektrischen Antrieb generierte Kraft.

Die Entriegelungseinheit ist so ausgebildet, dass diese Stellkraft überwunden werden kann, um das Sperrelement aus der Zuhalteposition zu lösen.

Die Entriegelungseinheit kann vorteilhaft als Fluchtentriegelungseinheit oder Notentsperrungseinheit ausgebildet sein. Wenn mit dem Sicherheitsschalter die Zuhaltung einer trennenden Schutzeinrichtung als Zugang zu einem Gefahrenbereich überwacht wird, kann bei Ausbildung der Entriegelungseinheit als Fluchtentriegelungseinheit ein Benutzer, der im Gefahrenbereich eingesperrt ist, die trennende Schutzeinrichtung manuell entsperren und aus dem Gefahrenbereich gelangen. Mit einer als Entsperrungseinheit ausgebildeten Entriegelungseinheit kann ein Benutzer von außen, also außerhalb des Gefahrenbereichs die trennende Schutzeinrichtung manuell entsperren.

Die Erfindung wird im Folgenden anhand der Zeichnungen erläutert. Es zeigen:
- Figur 1: Schematische Darstellung eines Ausführungsbeispiels der erfindungsgemäßen Entriegelungseinheit für einen Sicherheitsschalter
a) bei nicht betätigtem mechanischen Betätigungselement,
b) bei betätigtem mechanischen Betätigungselement.
- Figur 2: Schematische Darstellung der Entriegelungseinheit gemäß Figur 1 in Zuordnung zu einem Sperrelement
a) bei nicht betätigtem mechanischen Betätigungselement,
b) bei betätigtem mechanischen Betätigungselement.

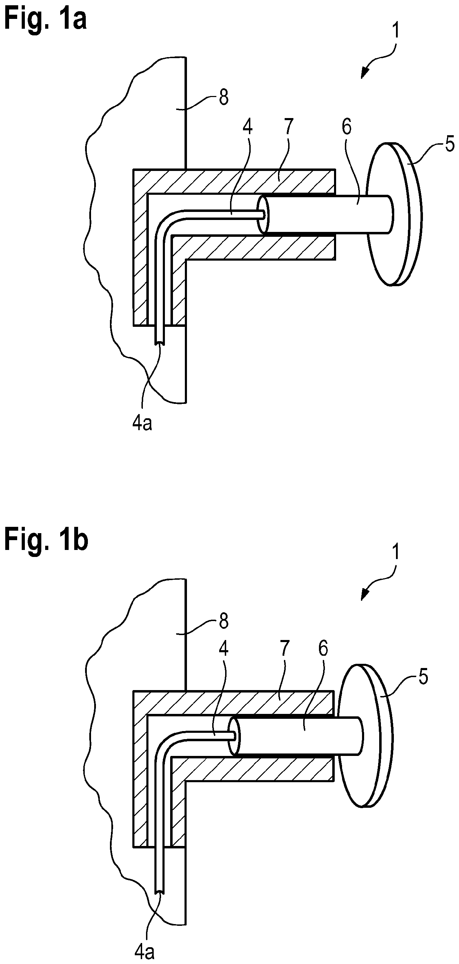

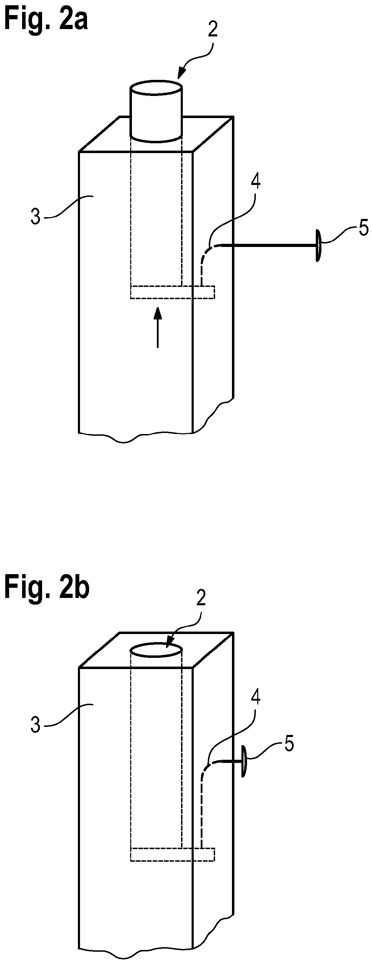

Die Figuren 1a und 1b zeigen schematisch den Aufbau eines Ausführungsbeispiels der erfindungsgemäßen Entriegelungseinheit 1 für einen Sicherheitsschalter. Die Figuren 2a und 2b zeigen die Zuordnung dieser Entriegelungseinheit 1 zu einem Sperrelement des Sicherheitsschalters.

Der nicht gesondert dargestellte Sicherheitsschalter wird im Bereich der Sicherheitstechnik eingesetzt, insbesondere zur Sicherung und Überwachung der Zuhaltung einer trennenden Schutzeinrichtung, insbesondere einer Schutztür, welche einen Zugang zu einem Gefahrenbereich bildet.

Dem Sicherheitsschalter ist typischerweise ein Betätiger zugeordnet, wobei der Sicherheitsschalter stationär an einem eine Türöffnung begrenzenden Rahmen angeordnet ist, während der Betätiger an der beweglichen trennenden Schutzeinrichtung angeordnet ist. Ist die trennende Schutzeinrichtung in ihre Schließstellung eingefahren, schließt sie die Türöffnung ab. In der Schließstellung ragt der Betätiger in eine Aufnahme, was zum Beispiel im Sicherheitsschalter dadurch erkannt wird, dass ein RFID-Lesegerät im Sicherheitsschalter die Signale eines Transponders im Betätiger erfasst.

Der Betätiger wird in dieser Stellung mittels eines Sperrelements zugehalten, wobei die Figuren 1b, 2a ein Beispiel einer solchen Zuhaltung zeigen.

Im vorliegenden Fall ist das Sperrelement von einem als Zuhaltebolzen 2 ausgebildeten Zuhalteelement gebildet. Der Zuhaltebolzen 2 ist in einer Führung 3 zwangsgeführt, so dass der Zuhaltebolzen 2 entlang seiner Längsachse bewegt werden kann. Diese Bewegung wird beispielsweise mit einem elektrischen Antrieb generiert.

Zur Bewirkung einer Zuhaltung des Betätigers, wenn sich die trennende Schutzeinrichtung in der Schließstellung befindet, wird mittels des elektrischen Antriebs der Zuhaltebolzen 2, wie in Figur 2a dargestellt, über das obere Ende der Führung 3 hinaus ausgefahren, so dass der zum Beispiel den Betätiger zugehalten. Der elektrische Antrieb übt dabei eine Kraft auf den Zuhaltebolzen 2 aus (in Figur 2a mit einem Pfeil dargestellt), der eine Stellkraft generiert, mit der der Zuhaltebolzen 2 den Betätiger sicher zugehalten.

Die Arbeitsweise des Sicherheitsschalters ist derart, dass dieser nur dann ein Schaltsignal zur Freigabe des Betriebs einer gefahrbringenden Maschine oder Anlage im Gefahrenbereich generiert, wenn die Schließstellung der trennenden Schutzeinrichtung durch Erfassung der Signale des Transponders detektiert sind und wenn mit dem Zuhaltebolzen 2 die Zuhaltung des Betätigers bewirkt ist.

Bei einem Notfall, wie zum Beispiel einem Stromausfall, kann mit der Entriegelungseinheit 1 manuell die Zuhaltung aufgehoben werden, so dass dann ein Benutzer die trennende Schutzeinrichtung öffnen kann. Die Entriegelungseinheit 1 kann als Fluchtentriegelungseinheit ausgebildet sein, so dass ein im Gefahrenbereich eingesperrter Benutzer aus diesem Gefahrenbereich gelangen kann. Alternativ kann die Entriegelungseinheit 1 als Notentsperrungseinheit ausgebildet sein, so dass ein außerhalb des Gefahrenbereichs angeordneter Benutzer die trennende Schutzeinrichtung öffnen kann.

Die in den Figuren 2a, 2b dargestellte Entriegelungseinheit 1 weist als wesentliche Komponente ein Schubband 4 auf. Das Schubband 4 ist in vorliegendem Fall von einem einzelnen Blechband gebildet, dessen Dicke erheblich geringer ist als dessen Breite. Die Dicke des Schubbands 4 ist so dimensioniert, dass das Schubband 4 in dessen Längsrichtung schubsteif ausgebildet ist, jedoch in einer in den Figuren 2a, 2b dargestellten Richtung biegbar ist, so dass das Schubband 4 auch längs gekrümmten Bahnen führbar ist.

Alternativ kann das Schubband 4 auch aus einer mehrlagigen Struktur von Blechbändern bestehen.

Die Entriegelungseinheit 1 weist als weitere Komponente ein mechanisches Betätigungselement in Form eines Druckknopfes 5 auf. An dem Druckknopf 5 ist ein zylindrisches Druckrohr 6 befestigt, wobei dieses an einer Stirnseite des Druckknopfs 5 senkrecht zu diesem ausmündet. Ein längsseitiges Ende des Schubbands 4 ist mit einem geeigneten, nicht dargestellten Befestigungsmittel fest mit dem Druckrohr 6 verbunden.

Als weitere Komponente der Entriegelungseinheit 1 ist eine Schubbandführung 7 für das Schubband 4 vorgesehen. Die rohrförmige Schubbandführung 7 ist in einer Gehäusewand 8 des Gehäuses des Sicherheitsschalters gelagert. Wie aus den Figuren 2a, 2b ersichtlich, weist die Schubbandführung 7 zwei winklig zueinander verbindende Rohrabschnitte auf.

Der horizontale Rohrabschnitt der Schubbandführung 7 steht über die Außenseite der Gehäusewand 8 hervor. In diesen Rohrabschnitt ragt das Druckrohr 6. Das am Druckrohr 6 ausmündende Schubband 4 verläuft zunächst im horizontalen Rohrabschnitt, wird dann durch eine Krümmung im Schubband 4 um einen Winkel abgelenkt und verläuft dann weiter im vertikalen Rohrabschnitt, wo das freie Ende 4a des Schubbands 4 ausmündet.

Das freie Ende 4a des Schubbands 4 ist kreisbogenförmig ausgeformt und damit für eine Ankopplung an den Zuhaltebolzen 2 angepasst. Wie die Figuren 2a, 2b zeigen, steht von der Unterseite des Zuhaltebolzens 2 ein zylindrischer Stift als Ankopplungselement hervor, wobei der Stift fest mit dem Zuhaltebolzen 2 verbunden ist. Die Längsachse des einen kreisförmigen Querschnitt aufweisenden Stifts verläuft senkrecht zur Längsachse des Zuhaltebolzens 2. Das freie Ende 4a des Schubbands 4 umschließt einen Teil der Mantelfläche des Stifts.

Der Hohlraum der Schubbandführung 7 ist so an die Dimension des Schubbands 4 angepasst, dass das Schubband 4 mit geringem Spiel in der Schubbandführung 7 geführt ist. Wird der Druckknopf 5 betätigt, wird daher das Schubband 4 in der Schubbandführung 7 ohne Gefahr eines Knickens oder Abbrechens in Richtung dessen Längsachse verschoben, das heißt die Schubbandführung 7 bildet eine Zwangsführung für das Schubband 4, die dafür sorgt, dass das Schubband 4 stets gemäß der in den Figuren 2a, 2b gekrümmten Bahnkurve verläuft.

Bei nicht betätigter Entriegelungseinheit 1 ist der Druckknopf 5 in seiner in Figur 1a dargestellten Ausgangslage, in welcher dieser beabstandet zum Rand der Schubbandführung 7 liegt und ein Teil des Druckrohrs 6 über die Schubbandführung 7 nach außen hervorsteht.

In dieser Position ragt das Schubband 4 nicht oder (wie in Figur 1a dargestellt) nur wenig über den vertikalen Rohrabschnitt der Schubbandführung 7 hervor. Das freie Ende 4a des Schubbands 4 liegt dann in Abstand zum Stift am Zuhaltebolzen 2 oder sitzt ohne nennenswerte Anpresskraft auf dem Stift auf (wie Figur 2b zeigt).

Die Betätigung der Entriegelungseinheit 1 erfolgt derart, dass ein Benutzer gegen den Druckknopf 5 drückt, wodurch dieser in Richtung der Schubbandführung 7 gedrückt wird, bis der Druckknopf 5 am Rand des horizontalen Rohrabschnitts der Schubbandführung 7 anliegt (wie in Figur 1b dargestellt).

Dadurch wird das Schubband 4 in Längsrichtung ausgelenkt, so dass das Schubband 4 mit seinem an dem freien Ende 4a anschließenden Abschnitt aus der Schubbandführung 7 herausgefahren wird (Figur 1b).

Da das Schubband 4 schubsteif ausgebildet ist, schiebt das Schubband 4 dadurch den Stift und damit den Zuhaltebolzen 2 nach unten und zwar so lange, bis der Zuhaltebolzen 2 komplett in die Führung 3 eingefahren ist, wie Figur 2b zeigt.

Durch das Einfahren des Zuhaltebolzens 2 in die Führung 3 wird die Zuhaltung aufgehoben, das heißt der Zuhaltebolzen 2 hält den Betätiger nicht mehr zu, so dass nun die trennende Schutzeinrichtung manuell geöffnet werden kann.

### Bezugszeichenliste

(1) Entriegelungseinheit
(2) Zuhaltebolzen
(3) Führung
(4) Schubband
(4a) freies Ende
(5) Druckknopf
(6) Druckrohr
(7) Schubbandführung
(8) Gehäusewand

## Patentansprüche

1. Sicherheitsschalter mit einem mittels Stellmitteln betätigbaren Sperrelement, wobei mittels der Stellmittel das Sperrelement in eine Zuhalteposition einbringbar und dort mit einer Stellkraft gehalten ist, **dadurch gekennzeichnet, dass** im Sicherheitsschalter eine Entriegelungseinheit (1) mit einem mechanisch betätigbaren Schubband (4) vorgesehen ist, wobei durch Betätigung des Schubbands (4) das Sperrelement aus seiner Zuhalteposition gelöst ist.

2. Sicherheitsschalter nach Anspruch 1, **dadurch gekennzeichnet, dass** mit dem Sperrelement eine trennende Schutzeinrichtung in ihrer Schließstellung gesichert ist.

3. Sicherheitsschalter nach Anspruch 2, **dadurch gekennzeichnet, dass** die Entriegelungseinheit (1) eine Fluchtentriegelungseinheit oder eine Notentsperrungseinheit ist.

4. Sicherheitsschalter nach einem der Ansprüche 1 bis 3, **dadurch gekennzeichnet, dass** das Sperrelement ein Zuhalteelement ist.

5. Sicherheitsschalter nach einem der Ansprüche 1 bis 4, **dadurch gekennzeichnet, dass** die Stellkraft eine Federkraft, eine Magnetkraft oder eine von einem elektrischen Antrieb generierte Kraft ist.

6. Sicherheitsschalter nach einem der Ansprüche 1 bis 5, **dadurch gekennzeichnet, dass** ein längsseitiges Ende des Schubbands (4) mit einem mechanischen Betätigungselement verbunden ist, wobei bei Betätigen des mechanischen Betätigungselements das Schubband (4) in dessen Längsrichtung bewegt ist, so dass das zweite längsseitige Ende auf das Sperrelement einwirkt.

7. Sicherheitsschalter nach Anspruch 6, **dadurch gekennzeichnet, dass** das mechanische Betätigungselement einen Druckknopf (5) aufweist.

8. Sicherheitsschalter nach einem der Ansprüche 6 oder 7, **dadurch gekennzeichnet, dass** die Kontur des zweiten längsseitigen Endes an die Kontur des Sperrelements angepasst ist.

9. Sicherheitsschalter nach einem der Ansprüche 1 bis 8, **dadurch gekennzeichnet, dass** das Schubband (4) in dessen Längsrichtung schubsteif ausgebildet ist und in einer Richtung quer zur Längsrichtung biegbar ist.

10. Sicherheitsschalter nach einem der Ansprüche 1 bis 9, **dadurch gekennzeichnet, dass** das Schubband (4) in einer Schubbandführung (7) entlang einer zumindest abschnittsweise gekrümmten Bahn verlaufend zwangsgeführt ist.

11. Sicherheitsschalter nach einem der Ansprüche 1 bis 10, **dadurch gekennzeichnet, dass** das Schubband (4) aus einem einzelnen Blechband oder aus einer mehrlagigen Struktur von Blechbändern besteht.

12. Sicherheitsschalter nach einem der Ansprüche 1 bis 10, **dadurch gekennzeichnet, dass** das Schubband (4) aus einem Kunststoffteil besteht.

13. Sicherheitsschalter nach einem der Ansprüche 1 bis 10, **dadurch gekennzeichnet, dass** das Schubband (4) aus einer Mehranordnung von in dessen Längsrichtung hintereinander angeordneten, gelenkig verbundenen Gliedern besteht.

14. Sicherheitsschalter nach Anspruch 13, **dadurch gekennzeichnet, dass** die Glieder aus Kunststoff und/oder Metall und/oder Keramik bestehen.

## Claims

1. A safety switch having a blocking element which can be actuated by means of actuating means, it being possible by means of the actuating means to bring the blocking element into a locking position and to hold it there with an actuating force, **characterized in that** an unlocking unit (1) having a mechanically actuable push band (4) is provided in the safety switch, the blocking element being released from its locking position by actuation of the push band (4).

2. A safety switch according to claim 1, **characterised in that** a separating protective device is secured in its closed position with the locking element.

3. A safety switch according to claim 2, **characterised in that** the unlocking unit (1) is an escape release unit or an emergency unlocking unit.

4. A safety switch according to one of claims 1 to 3, **characterised in that** the locking element is a guard locking element.

5. A safety switch according to one of claims 1 to 4, **characterised in that** the actuating force is a spring force, a magnetic force or a force generated by an electric drive.

6. A safety switch according to any one of claims 1 to 5, **characterised in that** a longitudinal end of the thrust band (4) is connected to a mechanical actuating element, wherein upon actuation of the mechanical actuating element the thrust band (4) is moved in the longitudinal direction thereof so that the second longitudinal end acts on the locking element.

7. A safety switch according to claim 6, **characterised in that** the mechanical actuating element comprises a push button (5).

8. A safety switch according to one of claims 6 or 7, **characterised in that** the contour of the second longitudinal end is adapted to the contour of the locking element.

9. A safety switch according to one of the claims 1 to 8, **characterised in that** the thrust band (4) is designed to be shear-resistant in its longitudinal direction and is bendable in a direction transverse to the longitudinal direction.

10. A safety switch according to one of claims 1 to 9, **characterised in that** the thrust belt (4) is positively guided in a thrust belt guide (7) along a path which is curved at least in sections.

11. A safety switch according to one of the claims 1 to 10, **characterised in that** the thrust strip (4) consists of a single sheet metal strip or of a multilayer structure of sheet metal strips.

12. A safety switch according to one of the claims 1 to 10, **characterised in that** the push belt (4) consists of a plastic rope.

13. A safety switch according to one of the claims 1 to 10, **characterised in that** the shoe lace (4) consists of a multi-arrangement of hinged links arranged one behind the other in its longitudinal direction.

14. A safety switch according to claim 13, **characterised in that** the members are made of plastic and/or metal and/or ceramic.

## Revendications

1. Interrupteur de sécurité pourvu d'un élément de blocage actionnable à l'aide de moyens de réglage, ledit élément de blocage pouvant être amené, à l'aide desdits moyens de réglage, à un emplacement de maintien auquel il est retenu par une force de manœuvre, **caractérisé par le fait qu'**une unité de déverrouillage (1), munie d'une courroie de poussée (4) actionnable mécaniquement, est prévue dans ledit interrupteur de sécurité, l'élément de blocage étant dégagé de son emplacement de maintien par actionnement de ladite courroie de poussée (4).

2. Interrupteur de sécurité selon la revendication 1, **caractérisé par le fait qu'**au moyen de l'élément de blocage, un dispositif de protection à effet de sectionnement est arrêté dans sa position fermée.

3. Interrupteur de sécurité selon la revendication 2, **caractérisé par le fait que** l'unité de déverrouillage (1) est une unité de déverrouillage d'évacuation ou une unité de déblocage d'urgence.

4. Interrupteur de sécurité selon l'une des revendications 1 à 3, **caractérisé par le fait que** l'élément de blocage est un élément de maintien.

5. Interrupteur de sécurité selon l'une des revendications 1 à 4, **caractérisé par le fait que** la force de manœuvre est une force élastique, une force magnétique ou une force engendrée par un entraînement électrique.

6. Interrupteur de sécurité selon l'une des revendications 1 à 5, **caractérisé par le fait qu'**une extrémité longitudinale de la courroie de poussée (4) est reliée à un élément mécanique d'actionnement, une activation dudit élément mécanique d'actionnement ayant pour effet de mouvoir ladite courroie de poussée (4) dans sa direction longitudinale, de telle sorte que la seconde extrémité longitudinale agisse sur l'élément de blocage.

7. Interrupteur de sécurité selon la revendication 6, **caractérisé par le fait que** l'élément mécanique d'actionnement est doté d'un bouton poussoir (5).

8. Interrupteur de sécurité selon l'une des revendications 6 ou 7, **caractérisé par le fait que** le profil de la seconde extrémité longitudinale est adapté au profil de l'élément de blocage.

9. Interrupteur de sécurité selon l'une des revendications 1 à 8, **caractérisé par le fait que** la courroie de poussée (4) est de réalisation rigide à la poussée dans sa direction longitudinale, et peut être fléchie dans une direction transversale par rapport à ladite direction longitudinale.

10. Interrupteur de sécurité selon l'une des revendications 1 à 9, **caractérisé par le fait que** la courroie de poussée (4) est guidée à force dans un guide (7) de ladite courroie de poussée, en s'étendant le long d'une trajectoire courbe au moins par zones.

11. Interrupteur de sécurité selon l'une des revendications 1 à 10, **caractérisé par le fait que** la courroie de poussée (4) est constituée d'un ruban individuel en tôle, ou d'une structure multicouches en des rubans de tôle.

12. Interrupteur de sécurité selon l'une des revendications 1 à 10, **caractérisé par le fait que** la courroie de poussée (4) est constituée d'une pièce en matière plastique.

13. Interrupteur de sécurité selon l'une des revendications 1 à 10, **caractérisé par le fait que** la courroie de poussée (4) consiste en un agencement multiple d'organes reliés de manière articulée, disposés en succession dans la direction longitudinale de ladite courroie.

14. Interrupteur de sécurité selon la revendication 13, **caractérisé par le fait que** les organes sont constitués de matière plastique et/ou de métal et/ou de céramique.
